# EUROPÄISCHE PATENTSCHRIFT

(11) **EP 2 252 813 B1**
(45) Veröffentlichungstag und Bekanntmachung des Hinweises auf die Patenterteilung: **03.06.2020**
(21) Anmeldenummer: 09723277.1
(22) Anmeldetag: 16.03.2009
(51) Int. Cl.: F16K 1/44

(54) **SITZREINIGUNGSFÄHIGES DOPPELSITZVENTIL MIT EINER REINIGUNGSEINRICHTUNG FÜR EINE GEHÄUSEDURCHFÜHRUNG**
DOUBLE SEAT VALVE CAPABLE OF CLEANING THE SEAT AND HAVING A CLEANING DEVICE FOR A HOUSING PENETRATION
SOUPAPE À DOUBLE SIÈGE, PERMETTANT LE NETTOYAGE DES SIÈGES, AVEC UN DISPOSITIF DE NETTOYAGE POUR UNE TRAVERSÉE DU BOÎTIER

(30) Priorität: 20.03.2008 DE 202008003976 U
(43) Veröffentlichungstag der Anmeldung: 24.11.2010
(73) Patentinhaber: GEA Tuchenhagen GmbH, 21514 Büchen (DE)
(72) Erfinder: BURMESTER, Jens, 23883 Grambek (DE)
(74) Vertreter: Eisenführ Speiser
(86) Internationale Anmeldenummer: PCT/EP2009/001886
(87) Internationale Veröffentlichungsnummer: WO 2009/115255

(56) Entgegenhaltungen:
- WO-A-92/21900
- DE-A1- 3 835 944
- DE-U1- 29 716 881

## Beschreibung

### TECHNISCHES GEBIET

Die Erfindung betrifft ein sitzreinigungsfähiges Doppelsitzventil mit einer Reinigungseinrichtung für eine reinigungskritische Gehäusedurchführung, wobei das Doppelsitzventil zwei seriell angeordnete, relativ zueinander bewegbare Schließglieder aufweist, die in der Schließstellung des Doppelsitzventils das Überströmen von Fluiden von einem Ventilgehäuseteil in ein anderes verhindern, die sowohl in der Schließ- als auch in der Offenstellung einen Leckagehohlraum begrenzen, der mit der Umgebung des Doppelsitzventils verbunden ist, wobei in der Schließstellung das als Schieberkolben ausgebildete erste Schließglied in einer die Ventilgehäuseteile miteinander verbindenden Verbindungsöffnung dichtend Aufnahme findet und im Zuge seiner Öffnungsbewegung am einer zweiten Sitzfläche zugeordneten zweiten Schließglied dichtend zur Anlage kommt und letzteres bei der weiteren Öffnungsbewegung gleichfalls in eine volle Offenstellung überführt wird, wobei das erste Schließglied eine erste Sitzdichtung aufweist, die radial gegenüber einer in der Verbindungsöffnung ausgebildeten zylindrischen ersten Sitzfläche abdichtet, mit den Schließgliedern, die unabhängig voneinander durch einen Teilhub jeweils spaltweit in eine Sitzreinigungsstellung zwecks Spülung ihrer Sitzflächen überführbar sind, wobei das zweite Schließglied durch den der Öffnungsbewegung gleichgerichteten zweiten Teilhub und das erste Schließglied durch den der Öffnungsbewegung entgegen gerichteten ersten Teilhub in die jeweilige Sitzreinigungsstellung überführbar sind, wobei das Doppelsitzventil, bezogen auf eine vertikale Anordnung, nach oben öffnet und oben einen beiden Schließgliedern gemeinsamen, deren Verstellstangen betätigenden Antrieb aufweist, wobei eine Ablaufbohrung, die in einem am ersten Schließglied angeordneten, das erste Ventilgehäuseteil nach unten abgedichtet durchdringenden Rohrschaft vorgesehen ist, den Leckagehohlraum mit der Umgebung verbindet, und wobei in der Sitzreinigungsstellung des ersten Schließgliedes gleichzeitig die Abdichtungsstelle zwischen dem Rohrschaft und dem ersten Ventilgehäuseteil geöffnet und spülbar ist.

Das zweite Schließglied kann gleichfalls als Schieberkolben mit radial wirkenden Dichtungsmitteln ausgestattet sein, wobei die zugeordnete zylindrische zweite Sitzfläche vorzugsweise ebenfalls in der Verbindungsöffnung ausgebildet ist. Das zweite Schließglied kann aber auch als Sitzteller ausgeführt sein, der auf einer zugeordneten ebenen oder konischen zweiten Sitzfläche axial bzw. axial/radial dichtet. Die Ventilstangen der beiden Schließglieder sind dabei in der Regel koaxial zueinander ausgerichtet und, wie vorstehend angegeben, gemeinsam nach oben aus dem zweiten Ventilgehäuseteil heraus- und in den Antrieb hineingeführt.

### STAND DER TECHNIK

Aus der DE 38 35 944 C2 ist ein sitzreinigungsfähiges Doppelsitzventil der einleitend gekennzeichneten Gattung bekannt, bei dem das erste Schließglied, das unabhängig angetriebene, als Schieberkolben ausgebildet und im Zuge der zugeordneten Sitzreinigung durch einen der Öffnungsbewegung entgegen gerichteten ersten Teilhub in seine Sitzreinigungsstellung überführbar ist. Das zweite Schließglied, das abhängig angetriebene, ist als Sitzteller ausgeführt, der auf einer zugeordneten konischen Sitzfläche dichtet, und es wird durch einen der Öffnungsbewegung gleichgerichteten zweiten Teilhub in seine Sitzreinigungsstellung überführt. Das Doppelsitzventil öffnet, bezogen auf seine vertikale Anordnungslage, von unten nach oben.

Ein das untere Ventilgehäuseteil nach unten abgedichtet durchsetzender Rohrschaft des ersten Schließgliedes ist im bewegten Durchdringungsbereich derart zu einem Zylinder, einem sog. Druckausgleichskolben, vergrößert, dass sich an der Oberseite des Druckausgleichskolbens eine Ringfläche ergibt, die etwa gleich der benachbarten Ringfläche an der Unterseite des ersten Schließgliedes ist. Zwischen der Außenfläche des Druckausgleichskolbens und einem unteren Ringansatz des letzteren ausbildenden Ventilgehäuseteils wird bei nach unten in Sitzreinigungsstellung bewegtem ersten Schließglied ein von oben nach unten freier kreisförmiger Spalt ausgebildet, über den die Außenfläche des Druckausgleichskolbens, der benachbarte gehäuseseitige Ringansatz sowie die gehäuseseitig angeordnete Dichtung des Druckausgleichskolbens gleichzeitig mit dem freigelegten Sitzbereich des ersten Schließgliedes spülbar sind.

Die bekannte Reinigungseinrichtung der kritischen Gehäusedurchführung des Druckausgleichskolbens ist insofern unbefriedigend, als die in Frage kommende Dichtung beim Reinigungsvorgang durch vollständiges Herausfahren des Druckausgleichskolbens aus dem Dichtungsbereich derart freigelegt wird, dass sie frei in den Innenraum des Ventilgehäuses hineinragt (s. insbesondere **Figur 7a**) und den Strömungskräften dadurch weitgehend ungeschützt ausgeliefert ist. Dabei ist die Reinigungswirkung im Bereich der Dichtung weniger intensiv als im freien kreisförmigen Spalt zwischen dem unteren Ringansatz des Ventilgehäuseteils und dem Druckausgleichskolben, da im Dichtungsbereich wegen des dort im Vergleich zum Spaltquerschnitt vorliegenden vielfach höheren Durchtrittsquerschnitts eine deutlich geringere Strömungsgeschwindigkeit des Reinigungsmittels wirksam ist.

In Verbindung mit einem sich an den unteren Ringansatz anschließenden Topf, der untenseits von dem Rohrschaft abgedichtet durchsetzt ist, wird weiterhin eine Spüleinrichtung gebildet, mit der der Druckausgleichskolben in Gänze reinigbar ist, so dass im Verlauf sich wiederholender voller Öffnungs- und Schließhübe in den Durchführungsbereich des Druckausgleichskolbens verschlepptes Produkt abzureinigen ist. Das sich am Boden des Topfes sammelnde, ggf. mit Produkt vermischte Reinigungsmittel gelangt über radiale Bohrungen im Rohrschaft in dessen Ablaufbohrung und wird gemeinsam mit dem aus der Sitzreinigung resultierenden Reinigungsmittel/Produkt in die Umgebung des Doppelsitzventils abgeführt. Eine sog. Sumpfbildung im Topf oberhalb seiner Abdichtung gegenüber dem Rohrschaft bis zur Unterkante der radialen Bohrungen ist nicht auszuschließen.

Eine Reinigung der Ventilstange des oberen, zweiten Schließgliedes im Bereich ihrer Durchführung durch das zugeordnete obere Ventilgehäuseteil ist nicht vorgesehen, wobei dieser Bereich hinsichtlich Produktverschleppung auch nach der derzeit maßgeblichen Sicherheitsphilosophie, wie nachfolgend dargestellt, als nicht kritisch angesehen wird.

Grundsätzlich lässt sich feststellen, dass die Gehäusedurchführung des Rohrschaftes oder die Durchführung des in diesem Bereich ggf. in Form eines Druckausgleichkolbens ausgebildeten Rohrschaftes des unabhängig angetriebenen, ersten Schließgliedes kritischer ist als die entsprechende Durchführung beim abhängig angetriebenen, zweiten Schließglied. Dies resultiert aus der Tatsache, dass das erste Schließglied beim Öffnungshub stets in Richtung des zweiten Schließgliedes bewegt und demzufolge die zugeordnete Ventilstange bzw. der Druckausgleichkolben des ersten Schließgliedes aus dem Durchdringungsbereich in das zugeordnete Ventilgehäuse hinein verschoben wird. Mit Blick auf das zweite Schließglied ergeben sich umgekehrte Verhältnisse; Teile der zugeordneten Ventilstange bzw. der ggf. in Form eines Druckausgleichkolbens ausgebildeten Ventilstange im Bewegungsumfang des Öffnungshubs werden aus dem zugeordneten Ventilgehäuseteil in den Durchdringungsbereich verschoben. Steht Produkt in beiden Ventilgehäuseteilen an, dann ergibt sich beim Öffnungs- und Schließhub infolge unzureichender Abstreifwirkung der in Frage kommenden Dichtung ggf. eine unvermeidbare, hinzunehmende Produktverschleppung in die zugeordneten Durchdringungsbereiche der Ventilstangen bzw. der Druckausgleichskolben beider Schließglieder. Steht jedoch nach der Produktfahrt Reinigungsflüssigkeit an, dann sind die in das zweite Ventilgehäuseteil hineinragenden Teile der Ventilstange bzw. des Druckausgleichkolbens des zweiten Schließgliedes bereits gereinigt und werden demzufolge beim Öffnungshub bzw. beim Teilhub auch gereinigt in die zugeordnete Durchführung hineingefahren.

Würde am ersten Schließglied keine Reinigung seines Rohrschaftes oder seines zu einem Druckausgleichskolbens erweiterten Rohrschaftes vorgesehen, dann wären im Zuge der Sitzreinigung des ersten Schließgliedes allenfalls die in der Schließlage in das zugeordnete Ventilgehäuseteil hineinragenden Bereiche des Rohrschaftes oder des Druckausgleichskolbens reinigbar, da die Sitzreinigung durch einen der Öffnungsbewegung entgegen gerichteten Teilhub erfolgt. Somit würden die im Durchdringungsbereich ggf. mit Produkt kontaminierten Bereiche des Rohrschaftes oder des Druckausgleichskolbens bei der bei der zugeordneten Sitzreinigung weiter nach außen verschoben und blieben einer Reinigung entzogen. Bei der anschließenden Produktfahrt werden beim vollen Öffnungshub des Doppelsitzventils diese kontaminierten Bereiche in den zugeordneten ersten Ventilgehäuseteil hineingefahren und können dort zu einer Rekontimination des Produktes führen.

Daher sieht die derzeit maßgebliche Sicherheitsphilosophie für Doppelsitzventile, die insbesondere im Nahrungsmittel- und Getränkebereich eingesetzt werden, bei höheren Anforderungen an die Hygiene der Prozessführung eine Reinigung des Rohrschaftes oder des zu einem Druckausgleichskolben erweiterten Rohrschaftes im in Rede stehenden Bereich des unabhängig angetriebenen, ersten Schließgliedes vor, wobei diese Reinigung entweder gleichzeitig mit der Sitzreinigung oder zeitverschoben zu derselben erfolgen kann.

Bei molkereitechnischen Anwendungen der in Rede stehenden sitzreinigungsfähigen Doppelsitzventile in den USA verlangen beispielsweise die dortigen FDA-Vorschriften zwingend, dass gleichzeitig mit der Sitzreinigung des unabhängig angetriebenen, ersten Schließgliedes auch die zugeordnete Durchführung des Rohrschaftes oder des zu einem Druckausgleichskolben erweiterten Rohrschaftes zu reinigen ist.

Es ist Aufgabe der vorliegenden Erfindung, bei einem Doppelsitzventil der gattungsgemäßen Art eine Reinigung der reinigungskritischen Gehäusedurchführung des Rohrschaftes oder des zu einem Druckausgleichskolben erweiterten Rohrschaftes des unabhängig angetriebenen, ersten Schließgliedes, beginnend vom Ventilgehäuseteil bis zu einer axialen Erstreckungslänge von mindestens dem gesamten Öffnungshub des Doppelsitzventils, sicherzustellen und dabei den vorstehend beschriebenen Stand der Technik zu verbessern.

### ZUSAMMENFASSUNG DER ERFINDUNG

Die Aufgabe wird durch ein Doppelsitzventil mit den Merkmalen des Anspruchs 1 gelöst. Vorteilhafte Ausgestaltungen des sitzreinigungsfähigen Doppelsitzventils gemäß der Erfindung sind in den Unteransprüchen beschrieben.

Dabei besteht der erfindungsgemäße Grundgedanke darin, dass bei nach unten um den ersten Teilhub bewegtem ersten Schließglied zwischen einer an der Mantelfläche des Rohrschaftes ausgebildeten Außenfläche und einer im ersten Ventilgehäuseteil angeordneten, diesen Rohrschaft abdichtenden Dichtung, die nachfolgend als erste Stangendichtung bezeichnet wird, ein in axialer Richtung frei durchgängiger Ringspalt ausgebildet ist. Eine strömungstechnisch nahezu ideale und damit reinigungstechnisch sehr wirkungsvolle Ausbildung des temporär gebildeten Ringspaltes zwischen der ersten Stangendichtung und dem Rohrschaft oder dem Druckausgleichskolben wird erreicht, wenn der besagte Ringspalt radial innenseits durch die Außenfläche des Rohrschaftes begrenzt ist, deren Kontur sich im Wesentlichen als Gegenkontur zur benachbarten Kontur der ersten Stangendichtung ergibt, wenn letztere gegenüber dem Rohrschaft frei liegt und entspannt ist. Die Stangendichtung besteht dabei aus einem elastischen Dichtungsteil und einem starren Einlegerteil. Weiterhin ist ein erster Führungsring angeordnet, der innenseits in einer Führungsbohrung von dem Rohrschaft durchdrungen ist und der mit seiner oberen stirnseitigen Begrenzungsfläche an dem elastischen Dichtungsteil der ersten Stangendichtung unter Vorspannung anliegt. Um auf dem Weg über den ersten Führungsring einen durchgehenden Strömungsweg zwischen dem temporär gebildeten Ringspalt und einem Abflussringspalt zu realisieren, sind in der Führungsbohrung, über deren Umfang verteilt, eine Vielzahl von Nuten zur Bildung von Durchtrittsspalten vorgesehen, deren jeweilige Längsachse gegenüber den parallelen stirnseitigen Begrenzungsflächen des ersten Führungsringes um einen Steigungswinkel angestellt ist. Diese Reinigung der kritischen Gehäusedurchführung des Rohrschaftes erfolgt in an sich bekannter Weise gleichzeitig mit der Sitzreinigung des ersten, als Schieberkolben ausgebildeten Schließgliedes, bei dem es sich um das unabhängig angetriebene Schließglied handelt. Zu diesem Zweck wird das erste Schließglied entgegen seiner Öffnungsrichtung um einen ersten Teilhub aus seiner Schließstellung so weit aus der Verbindungsöffnung nach unten in das erste Ventilgehäuseteil hinein verschoben, bis der zugeordnete zylindrische Ventilsitz zum Zwecke seiner Sitzreinigung spaltweit geöffnet ist. Dabei vollzieht der Rohrschaft im Bereich der ersten Stangendichtung eine entsprechende synchrone Teilhubbewegung.

Die Spaltbildung in diesem Bereich kann grundsätzlich auf zwei Arten erfolgen, nämlich zum Einen entweder durch einen an der Mantelfläche des Rohrschaftes in diesem Bereich vorgesehenen radialen Rücksprung oder durch eine axial begrenzte ring- und nutförmige Ausnehmung mit jeweils einer hinreichend spaltbildenden radialen Tiefe. Rücksprung oder Ausnehmung sind dabei axial so zu bemessen, dass in der Sitzreinigungsstellung die gehäuseseitig angeordnete erste Stangendichtung vollständig freigelegt ist.

Die zweite Art der Spaltbildung im in Rede stehenden Bereich kann zum Anderen auch prinzipiell dadurch realisiert werden, dass die erste Stangendichtung auf dem Rohrschaft angeordnet ist und ihre Freilegung in der Sitzreinigungsstellung dadurch erfolgt, dass dann die erste Stangendichtung in einer hinreichend axial bemessenen gehäuseseitigen Ausnehmung positioniert ist.

Wird der Rohrschaft in seinem die erste Stangendichtung durchdringenden Bereich in Form eines Druckausgleichskolbens ausgebildet, wie dies eine vorteilhafte Ausführungsform vorsieht, dessen dem ersten Schließglied zugewandte stirnseitige Ringfläche etwa gleich der benachbarten Ringfläche an der Unterseite des ersten Schließgliedes ist, dann sind die vorstehend beschriebenen Merkmale zur Spaltbildung im Bereich der ersten Stangendichtung sinngemäß auf diese Konfiguration zu übertragen.

Hohe Stabilität der ersten Stangendichtung, insbesondere unter dem Gesichtspunkt einer sicheren Einbettung im Ventilgehäuse, und eine optimale Bildung des temporären Ringspaltes zwischen Rohrschaft bzw. Druckausgleichskolben einerseits und der ersten Stangendichtung andererseits ergibt sich gemäß einer weiteren Ausführungsform dadurch, dass die erste Stangendichtung als Profildichtung ausgebildet ist, deren Grundform im Wesentlichen einen polygonalen Querschnitt aufweist. Dabei sind zwei gegenüberliegende Seiten, bezogen auf eine vertikale Anordnungslage des Doppelsitzventils, hauptsächlich vertikal orientiert. Die radial außenseitige und die untenseitige Begrenzungsfläche der ersten Stangendichtung sind ventilgehäuseseitig und die radial innenseitige Begrenzungsfläche, ausgenommen in der Sitzreinigungsstellung des ersten Schließgliedes, ist vom Rohrschaft begrenzt, und die obenseitige Begrenzungsfläche, mit Ausnahme des Bereichs einer Dichtungsschulter, liegt zum Innenraum des ersten Ventilgehäuseteils hin frei.

Die vorstehend angegebene Stabilität und sichere ventilgehäuseseitige Einbettung der ersten Stangendichtung wird dadurch signifikant verbessert, dass diese aus dem elastischen Dichtungsteil und dem starren Einlegerteil, der vom elastischen Dichtungsteil fast vollständig umschlossen ist, besteht.

In diesem Zusammenhang ist nach einer weiteren Ausführungsform gemäß der Erfindung vorgesehen, dass sich der Einlegerteil, bezogen auf den Querschnitt der ersten Stangendichtung, im Wesentlichen von unten und radial außen in Richtung nach oben und radial innen erstreckt, und dass das untenseitige Ende des Einlegerteils einen Teil der untenseitigen Begrenzungsfläche der ersten Stangendichtung bildet, mit einem freien Endabschnitt über die radial außenseitige Begrenzungsfläche der ersten Stangendichtung übersteht und mit diesem freien Endabschnitt form- oder form- und kraftschlüssig ventilgehäuseseitig festgelegt ist. Der vorstehend beschriebene Einlegerteil schafft eine hohe Stabilität der ersten Stangendichtung und er stellt eine definierte Lagefixierung der ersten Stangendichtung in radialer und axialer Richtung sicher, die bei form- und kraftschlüssiger Einbettung des freien Endabschnitts wie eine Einspannung desselben wirkt.

Um ein Eindringen von Produkt in den Fügespalt zwischen der ersten Stangendichtung und dem ersten Ventilgehäuse von dessen Innenraum her zu vermeiden, ist weiterhin vorgesehen, dass an der radial außenseitigen Begrenzungsfläche der ersten Stangendichtung eine Dichtungsschulter ausgebildet ist, die sich zum Innenraum des ersten Ventilgehäuseteils hin gegenüber letzterem abstützt. Im Zusammenwirken mit dem sich untenseits ventilgehäuseseitig abstützenden Einlegerteil wird die besagte Dichtungsschulter gegen eine korrespondierende ventilgehäuseseitige Gegenfläche verpresst, so dass hierdurch in allen Stellungen des Doppelsitzventils eine spaltfreie Einbettung der ersten Stangendichtung gegeben ist.

Die Dicht- und Abstreifwirkung der ersten Stangendichtung gegenüber dem Rohrschaft oder dem Druckausgleichskolben gestaltet sich besonders wirksam und nachhaltig, wenn die erste Stangendichtung an ihrer radial innenseitigen Begrenzungsfläche eine radial nach innen vorspringende, umlaufende, V-förmige Dichtungskante aufweist, an die sich eine abwärts verlaufende, radial nach außen rückspringende Dichtungsflanke anschließt.

Eine besonders vorteilhafte Ausgestaltung des Ringspaltes liegt dann vor, wenn die umlaufende, V-förmige Dichtungskante im Bereich eines radialen Rücksprunges oder einer axial begrenzten ring- und nutförmigen Ausnehmung, ausgebildet jeweils an der Mantelfläche des Rohrschaftes oder des Druckausgleichskolbens, positioniert ist, und wenn der unterhalb des Rücksprunges oder der Ausnehmung im Durchmesser ungeschmälerte Rohrschaft mit der rückspringenden Dichtungsflanke einen unteren Teil des Ringspaltes bildet. Die V-förmige Dichtungskante bildet dann die engste Stelle des Ringspaltes, wobei der, in Strömungsrichtung gesehen, vorgeordnete Bereich geringfügig düsenartig verengt ist und der nachgeordnete Bereich eine diffusorartige Erweiterung erfährt, so dass dieser tief liegende kritische Bereich durch Verwirbelung der Strömung eine intensivierte Reinigung erfährt.

Um den Rohrschaft oder den Druckausgleichskolben auf seiner gesamten Länge sicher zu reinigen und auch gegen mechanische Einflüsse zu schützen, sieht eine weitere Ausführungsform gemäß der Erfindung vor, dass sich an das untere Ventilgehäuseteil ein mit letzterem lösbar verbundenes, nach unten erstreckendes, buchsenförmiges Ablaufgehäuse anschließt, das innenseitig in einer Gehäusebohrung den Rohrschaft oder den Druckausgleichskolben in Gänze aufnimmt und diesen auf seiner gesamten aufgenommenen Länge mit einem Abflussringspalt umgibt.

Um die Führung des Rohrschaftes oder des Druckausgleichskolbens zu verbessern, ist weiterhin vorgesehen, dass eine der ersten Stangendichtung zugewandte Stirnseite des Ablaufgehäuses radial außenseits den Einlegerteil berandet und radial innenseits an eine sich abwärts erstreckende, rechteckförmige, umlaufende Ausnehmung in der Gehäusebohrung angrenzt, und dass in der Ausnehmung der erste Führungsring angeordnet ist. Der in axialer Richtung wirksame, vorgespannte Kontakt des elastischen Dichtungsteils mit dem ersten Führungsring stellt in diesem Bereich eine spaltfreie und sichere Einbettung des ersten Führungsringes sicher, so dass letzterer von dieser Seite nicht von jedwedem Fluid hinterwandert werden kann.

Um auch die gegenüberliegende Stirnseite des ersten Führungsringes gegenüber dem Ablaufgehäuse spaltfrei und sicher abzudichten, so dass der erste Führungsring auch von dieser Seite nicht von jedwedem Fluid hinterwandert werden kann, wird weiterhin vorgeschlagen, dass in der stirnseitigen Begrenzungsfläche der Ausnehmung eine Dichtungsnut vorgesehen ist, in der eine gegenüber dem ersten Führungsring in axialer Richtung abdichtende Dichtung Aufnahme findet.

Die besondere Ausgestaltung des Ablaufgehäuses an dessen unterem Ende erlaubt eine von der Sitzreinigungsströmung zunächst getrennte Abfuhr des Reinigungsmittels aus der Stangenreinigung, und zwar ohne jegliche Sumpfbildung in diesem Bereich. Dies wird dadurch erreicht, dass das Ablaufgehäuse an seinem unteren Ende radial innenseits in einem inneren radialen Vorsprung endet, der eine Ablauföffnung umschließt, die in der Schließstellung oder den Sitzreinigungsstellungen des Doppelsitzventils von einem sich an den Rohrschaft endseitig anschließenden Ring durchdrungen ist, aus dem die Ablaufbohrung unten- und radial innenseits ausmündet.

Gegenüber dem bekannten sitzreinigungsfähigen Doppelsitzventil mit einer Reinigung der kritischen Gehäusedurchführung des zu einem Druckausgleichskolben erweiterten Rohrschaftes seien noch einige weitere das erfindungsgemäße Doppelsitzventil auszeichnende Vorteile kurz erwähnt. Das Doppelsitzventil gemäß der Erfindung erfordert zur Realisierung der erfindungsgemäßen Mittel keine Verlängerung des Rohrschaftes oder des Druckausgleichskolbens und keine Vergrößerung des Hubes. Die Führung des Rohrschaftes oder des Druckausgleichskolbens ist gegenüber dem Stand der Technik verbessert und das Ablaufgehäuse ist vollständig leerlaufend. Die Reinigung der ersten Stangendichtung in den relevanten Bereichen ist signifikant verbessert und nahezu hubunabhängig. Die erste Stangendichtung erfährt eine stabilere Einbaulage durch Form, Armierung mittels Einlegerteil, Anordnung und Einspannung über den Einlegerteil in allen Stellungen des Doppelsitzventils, insbesondere in der Sitzreinigungsstellung des ersten Schließgliedes.

### KURZBESCHREIBUNG DER ZEICHNUNGEN

Die Erfindung wird nachfolgend anhand eines bevorzugten Ausführungsbeispiels näher erläutert. Während die Erfindung in den verschiedensten Ausbildungsformen realisierbar ist, werden in den Zeichnungen das besonders bevorzugte Ausführungsbeispiel gezeigt und nachfolgend beschrieben unter der Voraussetzung, dass dieses nur ein Beispiel für die Erfindung darstellt, nicht aber die Erfindung auf dieses speziell dargestellte Beispiel beschränkt ist. Es zeigen
- **Figur 1**: einen Meridianschnitt durch eine bevorzugte Ausführungsform des vorgeschlagenen sitzreinigungsfähigen Doppelsitzventils gemäß der Erfindung mit einer Reinigungseinrichtung für die kritische Gehäusedurchführung des zu einem Druckausgleichskolben erweiterten Rohrschaftes des unabhängig angetriebenen, ersten Schließgliedes, wobei sich das Doppelsitzventil in seiner Schließstellung befindet und der Antrieb nicht dargestellt ist;
- **Figur 2**: einen Meridianschnitt durch das Doppelsitzventil gemäß **Figur 1****,** wobei sich dieses in seiner Offenstellung befindet;
- **Figur 3**: in vergrößerter Darstellung eine in **Figur 1** mit "**A**" gekennzeichnete ausschnittsweise Darstellung der Reinigungseinrichtung für die Gehäusedurchführung des zu dem Druckausgleichskolben erweiterten Rohrschaftes;
- **Figur 4**: einen Meridianschnitt durch das Doppelsitzventil gemäß **Figur 1****,** wobei sich dieses in der Sitzreinigungsstellung des ersten Schließgliedes befindet;
- **Figur 5**: in vergrößerter Darstellung die in **Figur 4** mit **"B"** gekennzeichnete ausschnittsweise Darstellung der Reinigungseinrichtung für die Gehäusedurchführung des zu dem Druckausgleichskolben erweiterten Rohrschaftes nunmehr in der Sitzreinigungsstellung des ersten Schließgliedes und
- **Figur 6**: in perspektivischer Darstellung einen ersten Führungsring, wie er in der Reinigungseinrichtung des Doppelsitzventils gemäß den **Figuren 1** bis **5** Anwendung findet.

### DETAILLIERTE BESCHREIBUNG

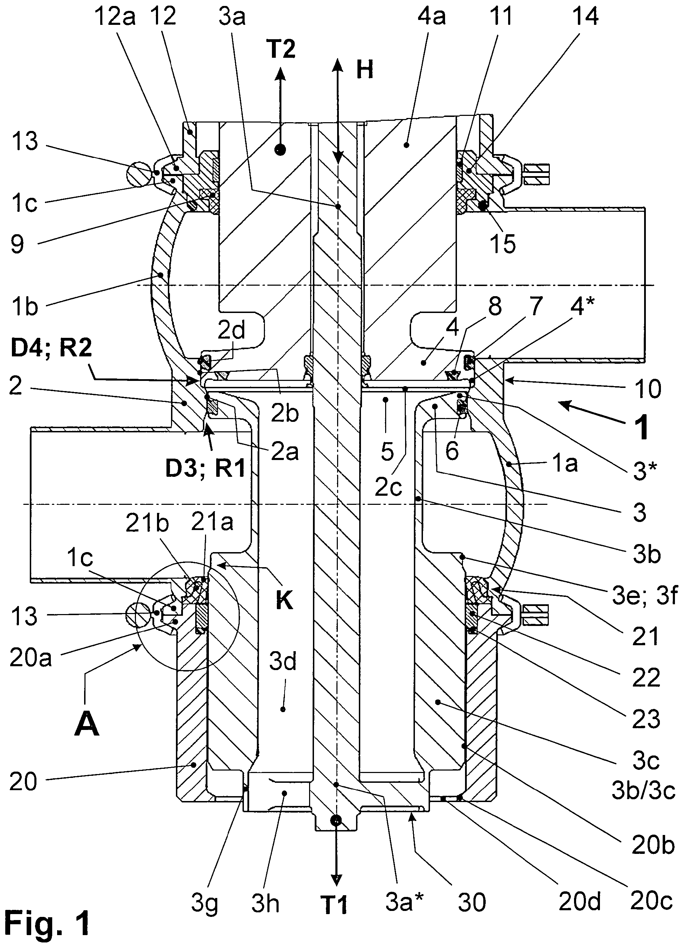

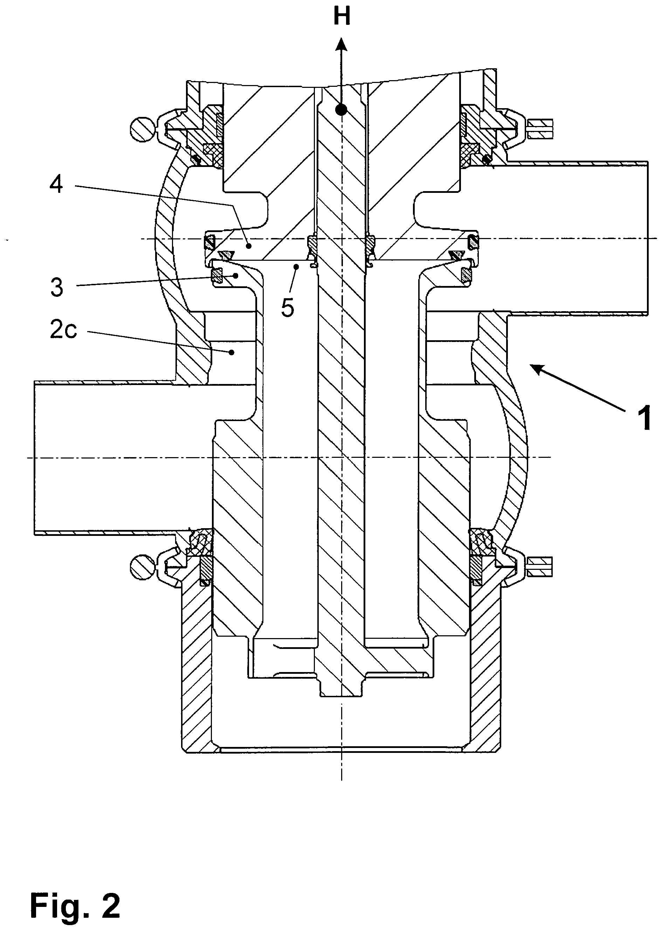

Das erfindungsgemäße Doppelsitzventil 1 (**Figur 1**) besteht in einer bevorzugten Ausführungsform im Wesentlichen aus dem Ventilgehäuse 10 mit einem ersten und einem zweiten Ventilgehäuseteil 1a bzw. 1b, den zwei unabhängig voneinander bewegbaren Schließgliedern 3 und 4 mit den jeweils zugeordneten Verstellstangen 3a bzw. 4a und einem Sitzring 2, der über eine innenseitige Verbindungsöffnung 2c (s. hierzu auch **Figur 2**) eine Verbindung zwischen den Ventilgehäuseteilen 1a, 1b herstellt.

Das als Schieberkolben ausgebildete erste Schließglied 3 (aktives oder unabhängig angetriebenes Schließglied) findet in der Schließstellung des Doppelsitzventils 1 in einer von der Verbindungsöffnung 2c gebildeten ersten Sitzfläche 2a, die als zylindrische Sitzfläche ausgeführt ist, dichtend Aufnahme. Hierzu ist in dem Schieberkolben 3 eine erste Sitzdichtung 6 vorgesehen, die ausschließlich durch radiale Vorspannung mit der ersten Sitzfläche 2a zusammenwirkt (radiale Dichtung im Gleiteingriff). Das ebenfalls als Schieberkolben ausgebildete zweite über eine zweite Sitzdichtung 7, die radial gegenüber der zweiten Sitzfläche 2b ebenfalls im Gleiteingriff abdichtet.

Die beiden Schließglieder 3, 4 bilden sowohl in der dargestellten Schließ-(**Figur 1**) als auch in einer Offenstellung (**Figur 2**), in der ein voller Öffnungshub H vollzogen ist, zwischen sich einen Leckagehohlraum 5, der über eine Ablaufbohrung 3d, die einen sich an das erste Schließglied 3 anschließenden Rohrschaft 3b/3c zentrisch durchdringt, mit der Umgebung des Doppelsitzventils 1 verbunden ist. Der Rohrschaft 3b/3c besteht in einem an das erste Schließglied 3 angrenzenden oberen Teil aus einem Verbindungsteil 3b und im unteren Teil aus einem sich an letzterem fortsetzenden Druckausgleichskolben 3c, dessen dem ersten Schließglied 3 zugewandte stirnseitige Ringfläche etwa gleich der benachbarten Ringfläche an der Unterseite des ersten Schließgliedes 3 ist.

Üblicherweise ist die erste Verstellstange 3a im Bereich des ersten Schließgliedes 3 mit letzterem über mehrere die Ablaufbohrung 3d sternförmig und in radialer Richtung durchsetzende Stege fest verbunden. Da diese Stege negative Rückwirkungen auf die Strömungsverhältnisse und das Strömungsbild im Leckagehohlraum 5 haben können, ist bei dem erfindungsgemäßen Doppelsitzventil 1 vorgesehen, diese mechanisch notwendigen Verbindungsstellen zwischen der ersten Verstellstange 3a und dem ersten Schließglied 3 in Form von mehreren, über den Umfang verteilt angeordneten Traversen 3h ein Stück weit vom Leckagehohlraum 5 entfernt, vorzugsweise an das dem ersten Schließglied 3 abgewandte Ende des Druckausgleichskolbens 3c hin, zu verlagern. Hierzu wird die erste Verstellstange 3a konzentrisch durch die Ablaufbohrung 3d hindurchgeführt und an ihrem Ende, einem Verstellstangenabschnitt 3a*, mittels vorzugsweise drei sternförmig radial orientierten, über den Umfang gleichmäßig verteilt angeordneten Traversen 3h mit einem umlaufenden Ring 3g fest verbunden, in den der Druckausgleichskolben 3c untenseits ausmündet. Zweckmäßig sind die Traversen 3h, der Ring 3g und der Verstellstangenabschnitt 3a* in einem einstückigen Anschweißteil 30 zusammengefasst.

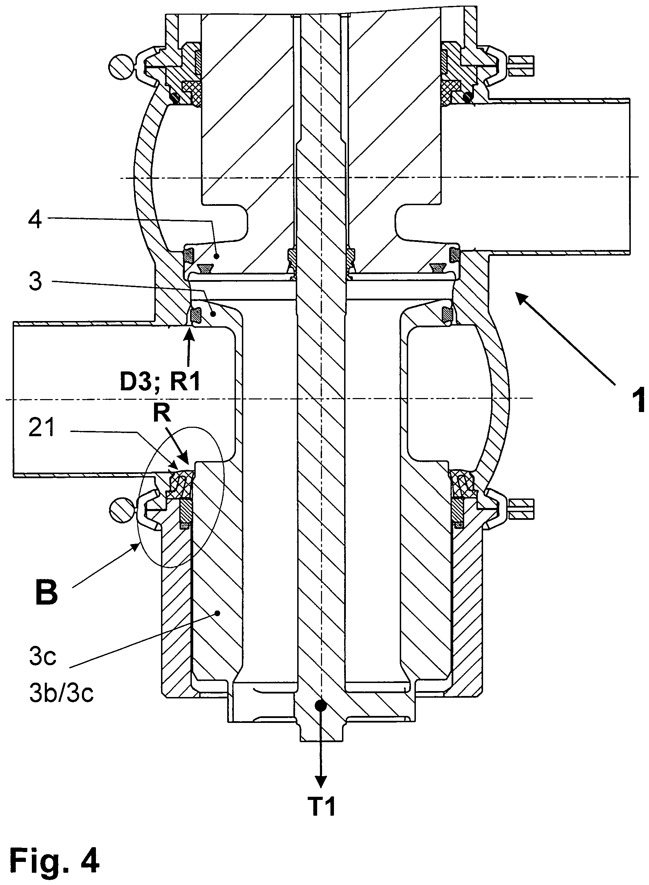

Jedes Schließglied 3, 4 weist leckageraumseitig einen zylindrischen Ansatz 3* bzw. 4* auf, der mit dem zugeordneten Teil der Verbindungsöffnung 2c im Sitzring 2 einen ringförmigen ersten Drosselspalt D3 (s. **Figuren 1****,** **4****;** gebildet zwischen der ersten Sitzfläche 2a und dem ersten zylindrischen Ansatz 3*) bzw. einen ringförmigen zweiten Drosselspalt D4 **(****Figur 1**; gebildet zwischen der zweiten Sitzfläche 2b und dem zweiten zylindrischen Ansatz 4*) ausbildet. Der erste Drosselspalt D3 wird gebildet, wenn das erste Schließglied 3 durch einen der Öffnungsbewegung entgegen gerichteten ersten Teilhub T1 in seine Sitzreinigungsstellung (die erste) überführt wird (s. **Figuren 4****,** **1**). In dieser ersten Teiloffenstellung T1 strömt Reinigungsmittel in Gestalt einer ersten Sitzreinigungsströmung R1 aus dem Innenraum des ersten Ventilgehäuseteils 1a über den zugeordneten spaltweit geöffneten Ventilsitz des ersten Schließgliedes 3 in den Leckagehohlraum 5 und wird von dort über die Ablaufbohrung 3d in die Umgebung des Doppelsitzventils 1 abgeführt.

Der zweite Drosselspalt D4 wird gebildet, wenn das zweite Schließglied 4 durch einen der Öffnungsbewegung gleichgerichteten zweiten Teilhub T2 in seine Sitzreinigungsstellung (die zweite) überführt wird (s. **Figur 1**; zweite Sitzreinigungsstellung nicht dargestellt). In dieser zweiten Teiloffenstellung T2 strömt Reinigungsmittel in Gestalt einer zweiten Sitzreinigungsströmung R2 aus dem Innenraum des zweiten Ventilgehäuseteils 1b über den zugeordneten, spaltweit geöffneten Ventilsitz des zweiten Schließgliedes 4 in den Leckagehohlraum 5 und wird von dort gleichfalls über die Ablaufbohrung 3d in die Umgebung des Doppelsitzventils 1 abgeführt.

Eine Mitteldichtung 8, die die Schließglieder 3, 4 bei ihrer Öffnungs- und Schließbewegung und in der vollen Offenstellung H gegeneinander abdichtet (**Figuren 1** und **2**), ist in der unteren Stirnseite des zweiten Schließgliedes 4 angeordnet. Die zweite als Hohlstange ausgebildete Verstellstange 4a umschließt konzentrisch die erste Verstellstange 3a und ist nach oben durch das zweite Ventilgehäuseteil 1b hindurchgeführt und wird dort gegenüber letzterem über eine zweite Stangendichtung 9 abgedichtet und mittels eines zweiten Führungsringes 11 geführt. Die zweite Stangendichtung 9 und der zweite Führungsring 9 sind in einem Dichtungsring- und Führungsring-Gehäuse 14 angeordnet, das zwischen dem zweiten Ventilgehäuseteil 1b und einem nur teilweise dargestellten Laternengehäuse 12 form- und kraftschlüssig festgelegt ist, wobei die Abdichtung des Dichtungsring- und Führungsring-Gehäuse 14 gegenüber dem zweiten Ventilgehäuseteil 1b über eine Gehäusedichtung 15 erfolgt. Das Laternengehäuse 12 verbindet das zweite Ventilgehäuseteil 1b mit einem nicht dargestellten Antrieb, der die in ihn hineingeführten Verstellstangen 3a, 4a betätigt. Die Verbindung zwischen dem zweiten Ventilgehäuseteil 1b und dem Laternengehäuse 12 erfolgt mittels eines ersten Klemmflansches 1c und eines komplementären zweiten Klemmflansches 12a, die mittels eines sog. Spannringes 13 lösbar miteinander verspannt sind.

Die Abdichtung des Rohrschaftes 3b/3c oder des Druckausgleichskolbens 3c im Bereich der Durchführung durch das erste Ventilgehäuseteil 1a erfolgt über eine erste Stangendichtung 21 (**Figuren 1**, **3** und **5**). Diese ist vorteilhaft als Profildichtung ausgebildet, deren Grundform im Wesentlichen einen polygonalen Querschnitt aufweist, wobei zwei gegenüberliegende Seiten, bezogen auf eine vertikale Anordnungslage des Doppelsitzventils 1, hauptsächlich vertikal orientiert sind. Eine radial außenseitige und eine untenseitige Begrenzungsfläche der ersten Stangendichtung 21 sind ventilgehäuseseitig und eine radial innenseitige Begrenzungsfläche, ausgenommen in der Sitzreinigungsstellung des ersten Schließgliedes 3, ist vom Rohrschaft 3b/3c begrenzt; eine obenseitige Begrenzungsfläche liegt, mit Ausnahme des Bereichs einer Dichtungsschulter 21a.2, zum Innenraum des ersten Ventilgehäuseteils 1a hin frei.

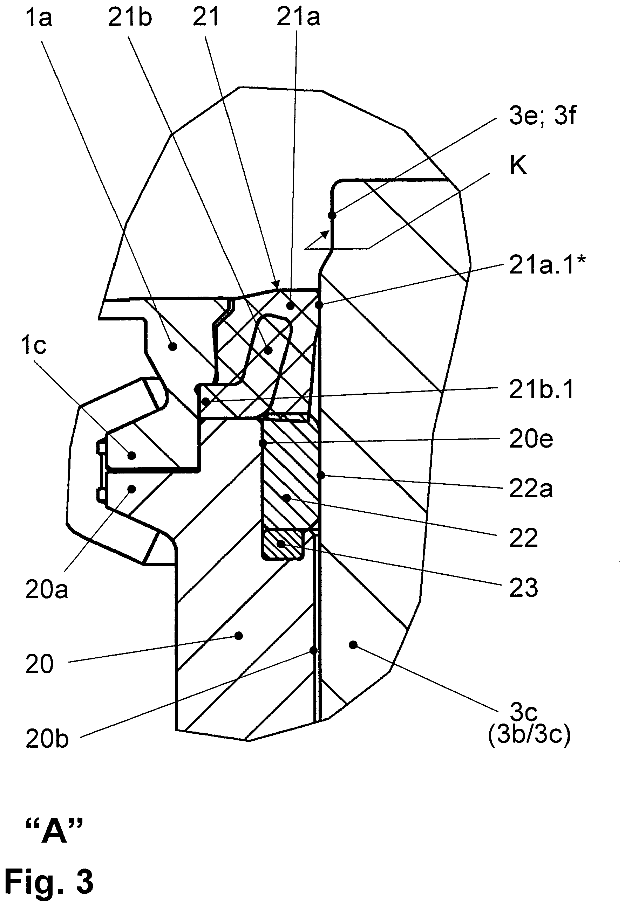

Die erste Stangendichtung 21 (**Figuren 3****,** **5****,** **1**) besteht aus einem elastischen Dichtungsteil 21a und einem starren Einlegerteil 21b. Der Einlegerteil 21b erstreckt sich, bezogen auf den Querschnitt der ersten Stangendichtung 21 in der dargestellten Zeichnungslage, im Wesentlichen von unten und radial außen in Richtung nach oben und radial innen, wobei das untenseitige Ende des Einlegerteils 21b einen Teil der untenseitigen Begrenzungsfläche der ersten Stangendichtung 21 bildet. Das untenseitige Ende des Einlegerteils 21b ragt dabei mit einem freien Endabschnitt 21b.1 über die radial außenseitige Begrenzungsfläche der ersten Stangendichtung 21 über und ist mit diesem freien Endabschnitt 21b.1 form- oder form- und kraftschlüssig ventilgehäuseseitig festgelegt.

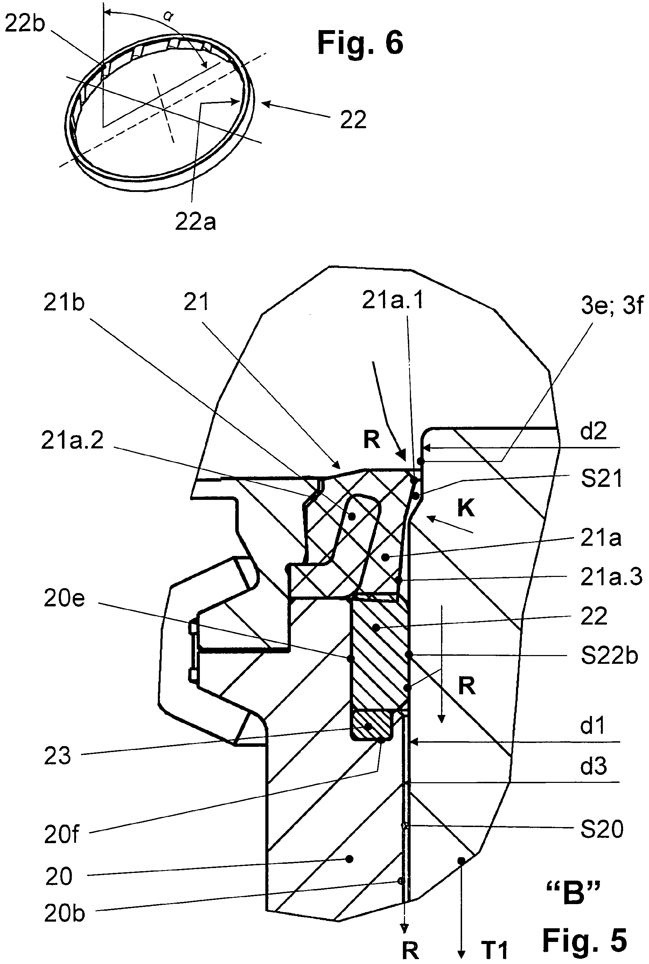

An der radial außenseitigen Begrenzungsfläche der ersten Stangendichtung 21 ist die Dichtungsschulter 21a.2 ausgebildet (**Figur 5**), die sich zum Innenraum des ersten Ventilgehäuseteils 1a hin gegenüber letzterem abstützt. Die erste Stangendichtung 21 weist an ihrer radial innenseitigen Begrenzungsfläche eine radial nach innen vorspringende, umlaufende, V-förmige Dichtungskante 21a.1 auf, an die sich eine abwärts verlaufende, radial nach außen rückspringende Dichtungsflanke 21a.3 anschließt. In jeder anderen Stellung des Doppelsitzventils 1 als in der ersten Sitzreinigungsstellung T1, wobei letztere im Bereich der ersten Stangendichtung 21 einen in **Figur 5** dargestellten temporär gebildeten Ringspalt S21 generiert und sich die umlaufende, V-förmige Dichtungskante 21a.1 voll ausgeprägt hat, ergibt sich für die erste Stangendichtung 21 in diesem Bereich eine Deformierungssituation, wie sie als Dichtungslage der umlaufenden, V-förmigen Dichtungskante 21a.1* in **Figur 3** dargestellt ist.

Nach Vollzug des ersten Teilhubes T1, das heißt in der ersten Sitzreinigungsstellung (**Figur 4**), wird temporär der Ringspalt S21 gebildet (**Figur 5**), der radial innenseits durch eine Außenfläche K des Rohrschaftes 3b/3c begrenzt ist, deren Kontur sich im Wesentlichen als Gegenkontur zur benachbarten Kontur der ersten Stangendichtung 21 ergibt, wenn letztere gegenüber dem Rohrschaft 3b/3c frei liegt und entspannt ist. Dabei ist die umlaufende, V-förmige Dichtungskante 21a.1 im Bereich eines radialen Rücksprunges 3e oder einer axial begrenzten ring- und nutförmigen Ausnehmung 3f, ausgebildet jeweils an der Mantelfläche des Rohrschaftes 3b/3c, positioniert, wobei der unterhalb des Rücksprunges 3e oder der Ausnehmung 3f im Durchmesser ungeschmälerte Rohrschaft 3b/3c mit der rückspringenden Dichtungsflanke 21a.3 einen unteren Teil des Ringspaltes S21 bildet. Der radiale Rücksprung 3e weist beispielsweise einen Rezessdurchmesser d2 auf (siehe **Figur 5**), während der ungeschmälerte Rohrschaft 3b/3c oder der Druckausgleichskolben 3c beispielsweise mit dem größeren Rohrschaft- oder Balancerdurchmesser d1 ausgeführt ist.

An das untere Ventilgehäuseteil 1a schließt sich ein mit letzterem lösbar verbundenes, nach unten erstreckendes, buchsenförmiges Ablaufgehäuse 20 an **(Figuren 1, 3, 5**), das innenseitig in einer Gehäusebohrung 20b den Rohrschaft 3b/3c oder den Druckausgleichskoben 3c in Gänze aufnimmt und diesen jeweils auf seiner gesamten aufgenommenen Länge mit einem Abflussringspalt S20 umgibt. Die radiale Erstreckung des Abflussringspaltes S20 ergibt sich aus der halben Durchmesserdifferenz zwischen einem Durchmesser der Ablaufgehäusebohrung d3 und dem Rohrschaft- oder Balancerdurchmesser d1 (**Figur 5**). Die Verbindung zwischen dem unteren Ventilgehäuseteil 1a und dem Ablaufgehäuse 20 erfolgt, wie vorstehend für die Verbindungsstelle zwischen dem zweiten Ventilgehäuseteil 1b und dem Laternengehäuse 12 bereits grundsätzlich beschrieben, mittels des ersten Klemmflansches 1c und eines komplementären dritten Klemmflansches 20a, die über einen weiteren Spannring 13 lösbar miteinander verspannt sind.

Eine der ersten Stangendichtung 21 zugewandte Stirnseite des Ablaufgehäuses 20 berandet radial außen den Einlegerteil 21b und grenzt radial innen an eine sich axial nach unten erstreckende, rechteckförmige, umlaufende Ausnehmung 20e in der Gehäusebohrung 20b (**Figuren 3****,** **5**), wobei in der Ausnehmung 20e ein erster Führungsring 22 angeordnet ist, der innenseits in einer Führungsbohrung 22a von dem Rohrschaft 3b/3c oder dem Druckausgleichskolben 3c durchdrungen ist und der mit seiner oberen stirnseitigen Begrenzungsfläche an dem elastischen Dichtungsteil 21a der ersten Stangendichtung 21 unter Vorspannung anliegt. In den **Figuren 3** und **5** ist der diesbezügliche elastische Deformierungsbereich der ersten Stangendichtung 21 überlappend gegenüber dem Führungsring 22 dargestellt, so dass erkennbar ist, in welchem Umfang die erste Stangendichtung 21 durch den Führungsring 22 in der Einbaulage deformiert ist. Der in axialer Richtung wirksame, vorgespannte Kontakt des elastischen Dichtungsteils 21a mit dem ersten Führungsring 22 stellt in diesem Bereich eine spaltfreie und sichere Einbettung des ersten Führungsringes 22 sicher, so dass letzterer von dieser Seite nicht von jedwedem Fluid hinterwandert werden kann.

In der Führungsbohrung 22a des Führungsringes 22 sind, über deren Umfang verteilt, eine Vielzahl von Nuten 22b vorgesehen (siehe **Figur 6**), deren jeweilige Längsachse gegenüber den parallelen stirnseitigen Begrenzungsflächen des ersten Führungsringes 22 um einen Steigungswinkel *α* angestellt ist. Die Nuten 22b bilden nutförmige Durchtrittsspalte S22b, die eine Weiterleitung einer mittels des temporär gebildeten Ringspaltes S21 aus dem ersten Ventilgehäuseteil 1a geernteten Dichtungsreinigungsströmung R (**Figuren 5****,** **4**) in den Abflussringspalt S20 sicherstellen.

In der stirnseitigen Begrenzungsfläche der Ausnehmung 20e ist eine Dichtungsnut 20f vorgesehen (**Figur 5**), in der eine gegenüber dem ersten Führungsring 22 in axialer Richtung abdichtende Dichtung 23 Aufnahme findet. Damit wird auch das untere Ende des ersten Führungsringes 22 gegenüber dem Ablaufgehäuse 20 spaltfrei und sicher abgedichtet, so dass der erste Führungsring 22 auch von dieser Seite nicht von jedwedem Fluid hinterwandert werden kann.

Das Ablaufgehäuse 20 endet an seinem unteren Ende radial innenseits in einem inneren radialen Vorsprung 20c (**Figur 1**), der eine Ablauföffnung 20d umschließt, die in der Schließstellung oder den Sitzreinigungsstellungen T1, T2 des Doppelsitzventils 1 von dem Ring 3g durchdrungen ist, aus dem die Ablaufbohrung 3d unten- und radial innenseits ausmündet.

Aus dem oben Genannten wird verständlich, dass verschiedene Modifikationen und Varianten realisiert werden können, ohne von dem neuen Konzept der vorliegenden Erfindung abzuweichen. Dies ist so zu verstehen, dass keine Beschränkung auf die Ausführungsformen beabsichtigt ist, welche hier dargestellt und beschrieben oder nur beschrieben worden sind. Die Offenbarung soll alle solchen Modifikationen umfassen, die sich innerhalb des von den Ansprüchen beanspruchten Schutzumfangs befinden.

### BEZUGSZEICHENLISTE DER VERWENDETEN ABKÜRZUNGEN

- 1: Doppelsitzventil
- 10: Ventilgehäuse
- 1a: erstes Ventilgehäuseteil
- 1 b: zweites Ventilgehäuseteil
- 1c: erster Klemmflansch

- 2: Sitzring
- 2a: erste Sitzfläche (zylindrische Sitzfläche)
- 2b: zweite Sitzfläche (axial; radial; axial/radial)
- 2c: Verbindungsöffnung
- 2d: ringförmige Ausnehmung

- 3: erstes Schließglied (Schieberkolben)
- 3*: erster zylindrischer Ansatz
- 3a: erste Verstellstange
- 3b/3c: Rohrschaft
- 3b: Verbindungsteil
- 3c: Druckausgleichskolben
- 3d: Ablaufbohrung
- 3e: radialer Rücksprung (Rezess)
- 3f: axial begrenzte ring- und nutförmige Ausnehmung

- 30: Anschweißteil
- 3a*: Verstellstangenabschnitt
- 3g: Ring
- 3h: Traverse

- 4: zweites Schließglied
- 4*: zweiter zylindrischer Ansatz
- 4a: zweite Verstellstange

- 5: Leckagehohlraum
- 6: erste Sitzdichtung (radial)
- 7: zweite Sitzdichtung (axial; radial; axial/radial)
- 8: Mitteldichtung (axial; im zweiten Schließglied 4)
- 9: zweite Stangendichtung
- 11: zweiter Führungsring

- 12: Laternengehäuse
- 12a: zweiter Klemmflansch

- 13: Spannring
- 14: Dichtungsring- und Führungsring-Gehäuse
- 15: Gehäusedichtung

- 20: Ablaufgehäuse
- 20a: dritter Klemmflansch
- 20b: Gehäusebohrung
- 20c: innerer radialer Vorsprung
- 20d: Ablauföffnung
- 20e: Ausnehmung
- 20f: Dichtungsnut

- 21: erste Stangendichtung
- 21a: elastischer Dichtungsteil
- 21a.1: umlaufende, V-förmige Dichtungskante
- 21a.1*: Dichtungslage der umlaufenden Dichtungskante
- 21a.2: Dichtungsschulter
- 21a.3: rückspringende Dichtungsflanke
- 21b: starrer Einlegerteil
- 21 b.1: freier Endabschnitt des Einlegerteils

- 22: erster Führungsring
- 22a: Führungsbohrung
- 22b: Nut
- 23: Dichtung

- *α*: Steigungswinkel

- d1: Rohrschaft- oder Balancerdurchmesser
- d2: Rezessdurchmesser
- d3: Durchmesser der Ablaufgehäusebohrung

- D3: erster Drosselspalt
- D4: zweiter Drosselspalt

- H: voller Öffnungshub (volle Offenstellung)
- K: Außenfläche des Rohrschaftes 3b/3c oder des Druckausgleichskolbens 3c
- R: Dichtungsreinigungsströmung (R(S21))
- R1: erste Sitzreinigungsströmung (R1(D3))
- R2: zweite Sitzreinigungsströmung (R2(D4))

- S20: Abflussringspalt
- S21: (temporär gebildeter) Ringspalt
- S22b: nutförmige Durchtrittsspalte

- T1: erster Teilhub (erste Teiloffenstellung/erste Sitzreinigungsstellung)
- T2: zweiter Teilhub (zweite Teiloffenstellung/zweite Sitzreinigungsstellung)

## Patentansprüche

1. Doppelsitzventil mit zwei seriell angeordneten, relativ zueinander bewegbaren Schließgliedern (3, 4), die in der Schließstellung des Doppelsitzventils (1) das Überströmen von Fluiden von einem Ventilgehäuseteil (1a; 1b) in ein anderes (1b; 1a) verhindern, die sowohl in der Schließ- als auch in der Offenstellung einen Leckagehohlraum (5) begrenzen, der mit der Umgebung des Doppelsitzventils (1) verbunden ist, wobei in der Schließstellung das als Schieberkolben ausgebildete erste Schließglied (3) in einer die Ventilgehäuseteile (1a, 1b) miteinander verbindenden Verbindungsöffnung (2c) dichtend Aufnahme findet und im Zuge seiner Öffnungsbewegung am einer zweiten Sitzfläche (2b) zugeordneten zweiten Schließglied (4) dichtend zur Anlage kommt und letzteres bei der weiteren Öffnungsbewegung gleichfalls in eine volle Offenstellung (H) überführt wird, wobei das erste Schließglied (3) eine erste Sitzdichtung (6) aufweist, die radial gegenüber einer in der Verbindungsöffnung (2c) ausgebildeten zylindrischen ersten Sitzfläche (2a) abdichtet, mit den Schließgliedern (3, 4), die unabhängig voneinander durch einen Teilhub (T1, T2) jeweils spaltweit in eine Sitzreinigungsstellung zwecks Spülung ihrer Sitzflächen (2a, 2b) überführbar sind, wobei das zweite Schließglied (4) durch den der Öffnungsbewegung gleichgerichteten zweiten Teilhub (T2) und das erste Schließglied (3) durch den der Öffnungsbewegung entgegen gerichteten ersten Teilhub (T1) in die jeweilige Sitzreinigungsstellung überführbar sind, wobei das Doppelsitzventil (1), bezogen auf eine vertikale Anordnung, nach oben öffnet und oben einen beiden Schließgliedern (3, 4) gemeinsamen, deren Verstellstangen (3a, 4a) betätigenden Antrieb aufweist, wobei eine Ablaufbohrung (3d), die in einem am ersten Schließglied (3) angeordneten, das erste Ventilgehäuseteil (1a) nach unten abgedichtet durchdringenden Rohrschaft (3b/3c) vorgesehen ist, den Leckagehohlraum (5) mit der Umgebung verbindet, und wobei in der Sitzreinigungsstellung des ersten Schließgliedes (3) gleichzeitig die Abdichtungsstelle zwischen dem Rohrschaft (3b/3c) und dem ersten Ventilgehäuseteil (1a) geöffnet und spülbar ist,
**dadurch gekennzeichnet,**
**dass** bei nach unten um den ersten Teilhub (T1) bewegtem ersten Schließglied (3) zwischen einer an der Mantelfläche des Rohrschaftes (3b/3c) ausgebildeten Außenfläche (K) und einer im ersten Ventilgehäuseteil (1a) angeordneten ersten Stangendichtung (21) ein in axialer Richtung frei durchgängiger Ringspalt (S21) ausgebildet ist, dass der temporär gebildete Ringspalt (S21) radial innenseits durch die Außenfläche (K) des Rohrschaftes (3b/3c) begrenzt ist, deren Kontur sich im Wesentlichen als Gegenkontur zur benachbarten Kontur der ersten Stangendichtung (21) ergibt, wenn letztere gegenüber dem Rohrschaft (3b/3c) frei liegt und entspannt ist, dass die erste Stangendichtung (21) aus einem elastischen Dichtungsteil (21a) und einem starren Einlegerteil (21b) besteht, dass ein erster Führungsring (22) angeordnet ist, der innenseits in einer Führungsbohrung (22a) von dem Rohrschaft (3b/3c) durchdrungen ist und der mit seiner oberen stirnseitigen Begrenzungsfläche an dem elastischen Dichtungsteil (21a) der ersten Stangendichtung (21) unter Vorspannung anliegt, und dass in der Führungsbohrung (22a) Nuten (22b) zur Bildung von Durchtrittsspalten (S22b) vorgesehen sind, die über den Umfang der Führungsbohrung (22a) verteilt sind und deren jeweilige Längsachse gegenüber den parallelen stirnseitigen Begrenzungsflächen des ersten Führungsringes (22) um einen Steigungswinkel (α) angestellt ist.

2. Doppelsitzventil nach Anspruch 1,
**dadurch gekennzeichnet,**
**dass** die erste Stangendichtung (21) als Profildichtung ausgebildet ist, deren Grundform im Wesentlichen einen polygonalen Querschnitt aufweist, wobei zwei gegenüberliegende Seiten, bezogen auf eine vertikale Anordnungslage des Doppelsitzventils (1), hauptsächlich vertikal orientiert sind, dass die radial außenseitige und die untenseitige Begrenzungsfläche der ersten Stangendichtung (21) ventilgehäuseseitig und die radial innenseitige Begrenzungsfläche, ausgenommen in der Sitzreinigungsstellung des ersten Schließgliedes (3), vom Rohrschaft (3b/3c) begrenzt sind, und dass die obenseitige Begrenzungsfläche zum Innenraum des ersten Ventilgehäuseteils (1a) hin frei liegt.

3. Doppelsitzventil nach Anspruch 1 oder 2,
**dadurch gekennzeichnet,**
**dass** sich der Einlegerteil (21b), bezogen auf den Querschnitt der ersten Stangendichtung (21), im Wesentlichen von unten und radial außen in Richtung nach oben und radial innen erstreckt, und dass das untenseitige Ende des Einlegerteils (21b) einen Teil der untenseitigen Begrenzungsfläche der ersten Stangendichtung (21) bildet, mit einem freien Endabschnitt (21b.1) über die radial außenseitige Begrenzungsfläche der ersten Stangendichtung (21) überragt und mit diesem freien Endabschnitt (21b.1) form- oder form- und kraftschlüssig ventilgehäuseseitig festgelegt ist.

4. Doppelsitzventil nach Anspruch 2 oder 3,
**dadurch gekennzeichnet,**
**dass** an der radial außenseitigen Begrenzungsfläche der ersten Stangendichtung (21) eine Dichtungsschulter (21a.2) ausgebildet ist, die sich zum Innenraum des ersten Ventilgehäuseteils (1a) hin gegenüber letzterem abstützt.

5. Doppelsitzventil nach einem der Ansprüche 2 bis 4,
**dadurch gekennzeichnet,**
**dass** die erste Stangendichtung (21) an ihrer radial innenseitigen Begrenzungsfläche eine radial nach innen vorspringende, umlaufende, V-förmige Dichtungskante (21a.1) aufweist, an die sich eine abwärts verlaufende, radial nach außen rückspringende Dichtungsflanke (21a.3) anschließt.

6. Doppelsitzventil nach Anspruch 5,
**dadurch gekennzeichnet,**
**dass** die umlaufende, V-förmige Dichtungskante (21a.1) im Bereich eines radialen Rücksprunges (3e) oder einer axial begrenzten ring- und nutförmigen Ausnehmung (3f), ausgebildet jeweils an der Mantelfläche des Rohrschaftes (3b/3c), positioniert ist, und dass der unterhalb des Rücksprunges (3e) oder der Ausnehmung (3f) im Durchmesser ungeschmälerte Rohrschaft (3b/3c) mit der rückspringenden Dichtungsflanke (21a.3) einen unteren Teil des Ringspaltes (S21) bildet.

7. Doppelsitzventil nach einem der Ansprüche 1 bis 6,
**dadurch gekennzeichnet,**
**dass** der Rohrschaft (3b/3c) in seinem die erste Stangendichtung (21) durchdringenden Bereich in Form eines Druckausgleichskolbens (3c) ausgebildet ist, dessen dem ersten Schließglied (3) zugewandte stirnseitige Ringfläche etwa gleich der benachbarten Ringfläche an der Unterseite des ersten Schließgliedes (3) ist.

8. Doppelsitzventil nach einem der Ansprüche 1 bis 7,
**dadurch gekennzeichnet,**
**dass** sich an das erste Ventilgehäuseteil (1a) ein mit letzterem lösbar verbundenes, nach unten erstreckendes, buchsenförmiges Ablaufgehäuse (20) anschließt, das innenseitig in einer Gehäusebohrung (20b) den Rohrschaft (3b/3c) in Gänze aufnimmt und diesen auf seiner gesamten aufgenommenen Länge mit einem Abflussringspalt (S20) umgibt.

9. Doppelsitzventil nach Anspruch 8,
**dadurch gekennzeichnet,**
**dass** eine der ersten Stangendichtung (21) zugewandte Stirnseite des Ablaufgehäuses (20) radial außenseits den Einlegerteil (21b) berandet und radial innenseits an eine sich axial nach unten erstreckende, rechteckförmige, umlaufende Ausnehmung (20e) in der Gehäusebohrung (20b) angrenzt, und dass in der Ausnehmung (20e) der erste Führungsring (22) angeordnet ist.

10. Doppelsitzventil nach Anspruch 9,
**dadurch gekennzeichnet,**
**dass** in der stirnseitigen Begrenzungsfläche der Ausnehmung (20e) eine Dichtungsnut (20f) vorgesehen ist, in der eine gegenüber dem ersten Führungsring (22) abdichtende Dichtung (23) Aufnahme findet.

11. Doppelsitzventil nach einem der Ansprüche 8 bis 10,
**dadurch gekennzeichnet,**
**dass** das Ablaufgehäuse (20) an seinem unteren Ende radial innenseits in einem inneren radialen Vorsprung (20c) endet, der eine Ablauföffnung (20d) umschließt, die in der Schließstellung oder den Sitzreinigungsstellungen des Doppelsitzventils (1) von einem sich an den Rohrschaft (3b/3c) endseitig anschließenden Ring (3g) durchdrungen ist, aus dem die Ablaufbohrung (3d) unten- und radial innenseits ausmündet.

## Claims

1. Double seat valve with two serially arranged closing members (3, 4) which are movable relative to each other, which, when the double seat valve (1) is in the closed position, prevent overflowing of fluids from one valve housing part (1a; 1b) into another (1b; 1a), which, both in the closed and also in the opened position, define a leakage cavity (5) which is connected to the area surrounding the double seat valve (1), wherein, in the closed position, the first closing member (3), designed as a slide piston, is received in a sealing manner in a connection opening (2c) which interconnects the valve housing parts (1a, 1b), and, during its opening movement, comes into position in a sealing manner on the second closing member (4) allocated to a second seat surface (2b), and the second closing member is also transferred into a fully opened position (H) as the opening movement continues, wherein the first closing member (3) comprises a first seat seal (6) which forms a seal radially opposite a cylindrical first seat surface (2a) formed in the connection opening (2c), with the closing members (3, 4) which can be transferred independently of each other by a partial stroke (T1, T2) in each case across the gap width into a seat cleaning position in order to rinse their seat surfaces (2a, 2b), wherein the second closing member (4) can be transferred by the second partial stroke (T2), which is in the same direction as the opening movement, and the first closing member (3) can be transferred by the first partial stroke (T1), which is in the opposite direction to the opening movement, into the respective seat cleaning position, wherein the double seat valve (1) is opened upwards relative to a vertical arrangement and comprises, at the top, a drive common to both closing members (3, 4) and actuating the adjustment rods (3a, 4a) thereof, wherein an outlet bore (3d) which is provided in a pipe shaft (3b/3c) - which is disposed on the first closing member (3) and passes through the first valve housing part (1a) downwards in a sealed manner - connects the leakage cavity (5) to the surrounding area, and wherein, when the first closing member (3) is in the seat cleaning position, at the same time the sealing point between the pipe shaft (3b/3c) and the first valve housing part (1a) can be opened and rinsed,
**characterised in that**, when the first closing member (3) has been moved downwards by the first partial stroke (T1), an annular gap (S21) which can be passed through freely in the axial direction is formed between an exterior surface (K), which is formed on the outer surface of the pipe shaft (3b/3c), and a first rod seal (21), which is disposed in the first valve housing part (1a), **in that** the temporarily formed annular gap (S21) is defined radially on the inside by the exterior surface (K) of the pipe shaft (3b/3c), the contour of which surface is provided substantially as a counter-contour to the adjacent contour of the first rod seal (21) when the latter is exposed with respect to the pipe shaft (3b/3c) and is relieved of pressure, **in that** the first rod seal (21) consists of an elastic sealing part (21a) and a rigid insert part (21b), **in that** a first guide ring (22) is disposed which, on the inside in a guide bore (22a), is passed through by the pipe shaft (3b/3c) and which, with its upper end-face boundary surface, lies against the elastic sealing part (21a) of the first rod seal (21) under pretensioning, and **in that** grooves (22b) are provided in the guide bore (22a) in order to form through gaps (S22b) which are distributed over the periphery of the guide bore (22a), and the respective longitudinal axis of which is set at a gradient angle (α) with respect to the parallel end-face boundary surfaces of the first guide ring (22).

2. Double seat valve as claimed in claim 1,
**characterised in that**
the first rod seal (21) is designed as a profile seal, the basic shape of which has a substantially polygonal cross-section, wherein two opposing sides, relative to a vertical arrangement position of the double seat valve (1), are principally vertically oriented, **in that** the radially outer and the bottom boundary surface of the first rod seal (21) on the valve housing side, and the radially inner boundary surface, except in the seat cleaning position of the first closing member (3), are defined by the pipe shaft (3b/3c), and **in that** the top boundary surface is freely exposed towards the inner space of the first valve housing part (1a).

3. Double seat valve as claimed in claim 1 or 2,
**characterised in that**
the insert part (21b) extends substantially from the bottom and radially outwards in the upwards and radially inwards direction relative to the cross-section of the first rod seal (21), and **in that** the bottom end of the insert part (21b) forms a part of the bottom boundary surface of the first rod seal (21), protrudes with a free end portion (21b.1) over the radially outer boundary surface of the first rod seal (21) and is fixed with this free end section (21b.1) in a positively or a positively and non-positively connected manner on the valve housing side.

4. Double seat valve as claimed in claim 2 or 3,
**characterised in that**
a sealing shoulder (21a.2) is formed on the radially outer boundary surface of the first rod seal (21) and is supported towards the inner space of the first valve housing part (1a) and with respect to same.

5. Double seat valve as claimed in any one of claims 2 to 4,
**characterised in that**
the first rod seal (21) comprises, on its radially inner boundary surface, a radially inwardly protruding, peripheral, V-shaped sealing edge (21a.1), which is adjoined by a downwardly extending, radially outwardly retreating sealing flank (21a.3).

6. Double seat valve as claimed in claim 5,
**characterised in that**
the peripheral, V-shaped sealing edge (21a.1) is positioned in the region of a radial depression (3e) or of an axially defined annular and groove-like recess (3f), formed respectively on the outer surface of the pipe shaft (3b/3c), and **in that** the pipe shaft (3b/3c), which has an undiminished diameter below the depression (3e) or the recess (3f), forms a lower part of the annular gap (S21) with the retreating seal flank (21a.3).

7. Double seat valve as claimed in any one of claims 1 to 6,
**characterised in that**,
in its region passing through the first rod seal (21), the pipe shaft (3b/3c) is designed in the form of a pressure compensation piston (3c), the front-face annular surface of which, facing the first closing member (3), is approximately the same as the adjacent annular surface on the underside of the first closing member (3).

8. Double seat valve as claimed in any one of claims 1 to 7,
**characterised in that**
a downwardly-extending, bushing-like outlet housing (20) adjoins the first valve housing part (1a), being releasably connected thereto, said outlet housing receiving the entire pipe shaft (3b/3c) on the inside in an housing bore (20b) and surrounding said pipe shaft over its entire received length with an annular drainage gap (S20).

9. Double seat valve as claimed in claim 8,
**characterised in that**
an end face of the outlet housing (20), which faces the first rod seal (21), borders the insert part (21) radially on the outside and is adjacent, radially on the inside; to an axially downwardly extending, rectangular, peripheral recess (20e) in the housing bore (20b), and **in that** the first guide ring (22) is disposed in the recess (20e).

10. Double seat valve as claimed in claim 9,
**characterised in that**,
in the end-face boundary surface of the recess (20e), a sealing groove (20f) is provided, in which a seal (23), which forms a seal with respect to the first guide ring (22), is received.

11. Double seat valve as claimed in any one of claims 8 to 10,
**characterised in that**
the outlet housing (20) terminates at its lower end radially on the inside in an inner radial protrusion (20c) which surrounds an outlet opening (20d), which, when the double seat valve (1) is in the closed position or the seat cleaning positions, is passed through by a ring (3g), which, at the end face, adjoins the pipe shaft (3b/3c), from which ring the outlet bore (3d) issues at the bottom and radially on the inside.

## Revendications

1. Soupape à double siège avec deux organes de fermeture (3, 4) agencés en série, mobiles l'un par rapport à l'autre, qui empêchent dans la position de fermeture de la soupape à double siège (1) le débordement de fluides d'une partie de boîtier de soupape (la ; 1b) dans une autre (1b ; 1a) qui délimitent non seulement dans la position de fermeture mais aussi dans la position ouverte un espace creux de fuite (5) qui est relié à l'environnement de la soupape à double siège (1), dans laquelle dans la position de fermeture le premier organe de fermeture (3) réalisé comme piston de tiroir est reçu de manière étanche dans une ouverture de liaison (2c) reliant entre elles les parties de boîtier de soupape (1a, 1b) et vient en appui de manière étanche au cours de son mouvement d'ouverture contre un second organe de fermeture (4) associé à une seconde surface de siège (2b) et ce dernier est transféré lors de la suite du mouvement d'ouverture aussi dans une position ouverte pleine (H), dans laquelle le premier organe de fermeture (3) présente une première garniture de siège (6) qui rend étanche radialement par rapport à une première surface de siège (2a) cylindrique réalisée dans l'ouverture de liaison (2c), avec les organes de fermeture (3, 4) qui peuvent être transférés indépendamment l'un de l'autre par une course partielle (T1, T2) respectivement d'une largeur de fente dans une position de nettoyage de siège afin de rincer leurs surfaces de siège (2a, 2b), dans laquelle le second organe de fermeture (4) peut être transféré par la seconde course partielle (T2) dirigée dans le même sens que le mouvement d'ouverture et le premier organe de fermeture (3) peut être transféré par la première course partielle (T1) dirigée en sens inverse au mouvement d'ouverture dans la position de nettoyage de siège respective, dans laquelle la soupape à double siège (1), par rapport à un agencement vertical, ouvre vers le haut et présente en haut un entraînement commun aux deux organes de fermeture (3, 4), actionnant leurs tiges de réglage (3a, 4a), dans laquelle un perçage d'écoulement (3d) qui est prévu dans une tige tubulaire (3b/3c) agencé au niveau du premier organe de fermeture (3), traversant de manière étanche la première partie de boîtier de soupape (1a) vers le bas, relie l'espace creux de fuite (5) à l'environnement, et dans laquelle dans la position de nettoyage de siège du premier organe de fermeture (3) simultanément le point d'étanchéité entre la tige tubulaire (3b/3c) et la première partie de boîtier de soupape (1a) est ouvert et peut être rincé,
**caractérisée en ce**
**que** pour un premier organe de fermeture (3) déplacé vers le bas de la première course partielle (T1) entre une surface extérieure (K) réalisée au niveau de la surface enveloppe de la tige tubulaire (3b/3c) et une première garniture de tige (21) agencée dans la première partie de boîtier de soupape (1a) une fente annulaire (S21) continue librement dans le sens axial est réalisée, que la fente annulaire formée temporairement (S21) est délimitée radialement du côté intérieur par la surface extérieure (K) de la tige tubulaire (3b/3c), dont le contour résulte sensiblement comme contour antagoniste pour le contour contigu de la première garniture de tige (21) lorsque ce dernier est libre par rapport à la tige tubulaire (3b/3c) et est détendu, que la première garniture de tige (21) se compose d'une partie de garniture élastique (21a) et d'une partie d'insert (21b) rigide, qu'un premier anneau de guidage (22) est agencé, lequel est traversé côté intérieur dans un perçage de guidage (22a) par la tige tubulaire (3b/3c) et qui repose avec sa surface de limitation côté avant supérieure contre la partie de garniture (21a) élastique de la première garniture de tige (21) sous précontrainte, et que dans le perçage de guidage (22a) des rainures (22b) sont prévues pour la formation de fentes de passage (S22b) qui sont distribuées sur la périphérie du perçage de guidage (22a) et dont l'axe longitudinal respectif est mis en place par rapport aux surfaces de limitation côté avant parallèles du premier anneau de guidage (22) autour d'un angle d'inclinaison (α).

2. Soupape à double siège selon la revendication 1,
**caractérisée en ce**
**que** la première garniture de tige (21) est réalisée comme garniture de profil, dont la forme de base présente sensiblement une section transversale polygonale, dans laquelle deux côtés opposés, par rapport à une position d'agencement verticale de la soupape à double siège (1), sont orientés principalement verticalement, que la surface de limitation côté extérieur radialement et la surface de limitation côté inférieur de la première garniture de tige (21) sont délimitées côté boîtier de soupape et la surface de limitation côté intérieur radialement, excepté dans la position de nettoyage de siège du premier organe de fermeture (3), est délimitée par la tige tubulaire (3b/3c), et que la surface de limitation côté supérieur est libre vers l'espace intérieur de la première partie de boîtier de soupape (1a).

3. Soupape à double siège selon la revendication 1 ou 2,
**caractérisée en ce**
**que** la partie d'insert (21b), par rapport à la section transversale de la première garniture de tige (21), s'étend sensiblement du bas et radialement à l'extérieur en direction du haut et radialement à l'intérieur, et que l'extrémité côté inférieur de la partie d'insert (21b) forme une partie de la surface de limitation côté inférieur de la première garniture de tige (21), avec une section d'extrémité (21b.1) libre dépasse de la surface de limitation radialement côté extérieur de la première garniture de tige (21) et est fixée avec cette section d'extrémité libre (21b.1) à complémentarité de forme ou à complémentarité de forme et à force côté boîtier de soupape.

4. Soupape à double siège selon la revendication 2 ou 3,
**caractérisée en ce**
**qu'**un épaulement de garniture (21a.2) est réalisé contre la surface de limitation radialement côté extérieur de la première garniture de tige (21), lequel s'appuie vers l'espace intérieur de la première partie de boîtier de soupape (1a) par rapport à celle-ci.

5. Soupape à double siège selon l'une des revendications 2 à 4,
**caractérisée en ce**
**que** la première garniture de tige (21) présente contre sa surface de limitation côté intérieur radialement une arête de garniture (21a.1) en forme de V, tournante, dépassant radialement vers l'intérieur, à laquelle un flanc de garniture (21a.3) s'étendant vers le bas, revenant radialement vers l'extérieur est contigu.

6. Soupape à double siège selon la revendication 5,
**caractérisée en ce**
**que** l'arête de garniture (21a.1) en forme de V, tournante est positionnée dans la zone d'un retour (3e) radial ou d'un évidement en forme d'anneau ou de rainure délimité axialement (3f), réalisé respectivement au niveau de la surface enveloppe de la tige tubulaire (3b/3c), et que la tige tubulaire (3b/3c) au diamètre non réduit en dessous du retour (3e) ou de l'évidement (3f) forme avec le flanc de garniture (21a.3) revenant une partie inférieure de la fente annulaire (S21).

7. Soupape à double siège selon l'une des revendications 1 à 6,
**caractérisée en ce**
**que** la tige tubulaire (3b/3c) est réalisée dans sa zone traversant la première garniture de tige (21) sous la forme d'un piston de compensation de pression (3c), dont la surface annulaire côté avant tournée vers le premier organe de fermeture (3) est à peu près identique à la surface annulaire contiguë au niveau du côté inférieur du premier organe de fermeture (3).

8. Soupape à double siège selon l'une des revendications 1 à 7,
**caractérisée en ce**
**qu'**un boîtier d'écoulement (20) en forme de douille, s'étendant vers le bas, relié de manière amovible à cette dernière est contigu à la première partie de boîtier de soupape (1a), lequel reçoit dans l'ensemble côté intérieur dans un perçage de boîtier (20b) la tige tubulaire (3b/3c) et entoure ce dernier sur sa longueur entière reçue avec une fente annulaire d'évacuation (S20).

9. Soupape à double siège selon la revendication 8,
**caractérisée en ce**
**qu'**un côté avant tourné vers la première garniture de tige (21) du boîtier d'écoulement (20) encadre radialement côté extérieur la partie d'insert (21b) et est contigu radialement côté intérieur à un évidement (20e) tournant, rectangulaire, s'étendant axialement vers le bas dans le perçage de boîtier (20b), et que le premier anneau de guidage (22) est agencé dans l'évidement (20e).

10. Soupape à double siège selon la revendication 9,
**caractérisée en ce**
**qu'**une rainure de garniture (20f) est prévue dans la surface de limitation côté avant de l'évidement (20e), dans laquelle une garniture (23) rendant étanche par rapport au premier anneau de guidage (22) est reçue.

11. Soupape à double siège selon l'une des revendications 8 ou 10,
**caractérisée en ce**
**que** le boîtier d'écoulement (20) se termine au niveau de son extrémité inférieure radialement côté intérieur dans une saillie radiale intérieure (20c) qui entoure une ouverture d'écoulement (20d) qui est traversée dans la position de fermeture ou les positions de nettoyage de siège de la soupape à double siège (1) par un anneau (3g) contigu côté extrémité à la tige tubulaire (3b/3c), duquel le perçage d'écoulement (3d) débouche côté inférieur et radialement côté intérieur.
